# EUROPEAN PATENT SPECIFICATION

(11) **EP 3 868 500 B1**
(45) Date of publication and mention of the grant of the patent: **17.07.2024**
(21) Application number: 20158576.7
(22) Date of filing: 20.02.2020
(51) Int. Cl.: B23B 27/10, B23B 27/16

(54) **TURNING TOOL**
DREHWERKZEUG
OUTIL DE TOURNAGE

(43) Date of publication of application: 25.08.2021
(73) Proprietor: WALTER AG, 72072 Tübingen (DE)
(72) Inventor: BÜRKLE, Hubert, 72072 Tübingen (DE)
(74) Representative: Sandvik

(56) References cited:
- EP-A1- 2 703 104
- WO-A1-2013/084222
- WO-A1-2014/174507
- WO-A1-2019/106661
- US-A1- 2019 160 549

## Description

### Technical field

The present invention relates to a turning tool for metal cutting comprising a tool body with an insert seat, a clamping member and a clamping pin, wherein the clamping pin connects the tool body and the clamping member for clamping a cutting insert in the insert seat.

### Background

US 2019/0160549 discloses a turning tool comprising a fastener for securing together a clamp and a tool body for clamping a turning insert in an insert pocket. The fastener extends through a hole in the clamp and into a threaded hole in the tool body. The fastener has a male thread and is screwed into the threaded hole in the tool body for clamping the turning insert under the clamp in the insert pocket. The fastener has an internal coolant channel which comprises several openings located in a head of the fastener. The clamp has an internal coolant channel that has an exit opening close to the edge of a clamped turning insert. In certain angular positions of the fastener, one of the openings in the head is aligned with the internal coolant channel in the clamp for establishing fluid communication between the two coolant channels and directing coolant to the turning insert. A problem with this known turning tool is that clamping of the turning insert cannot be adjusted without affecting the coolant supply.

### Summary

It is an object of the present invention to at least partly obviate the above-mentioned problem. This object is achieved according to the invention by means of a turning tool as defined in claim 1.

An inventive turning tool for metal cutting comprises
- a tool body, which has a tool body top surface, and which comprises, arranged at a front end in the tool body top surface, an insert seat for receiving a cutting insert, and a tool body bore that is spaced apart from the insert seat and extends downward from an opening in the tool body top surface,
- a clamping member, which is arranged at the tool body top surface, and which comprises
   - a base body, which has a base body top surface, and a base body bottom surface facing the tool body top surface, and a clamping member through hole, which extends from an opening in the base body top surface to an opening in the base body bottom surface, and which is aligned with the tool body bore,
   - and a clamping arm, which protrudes from the base body and extends at least a portion over the insert seat, and
- a clamping pin, which connects the tool body and the clamping member, and which comprises a longitudinal shaft that has a longitudinal axis and that extends through the clamping member through hole and into the tool body bore, wherein the shaft is axially movably received in the tool body bore and operable to move to a first axial position, a head at an upper end of the shaft, and a coolant fluid channel having a first outlet opening in the head,
wherein
- the clamping pin is configured to, in the first axial position, engage the base body and force the base body, together with the protruding clamping arm, toward the tool body top surface, whereby, when a cutting insert is received in the insert seat, the cutting insert is clamped in the insert seat,
- in the first axial position, the first outlet opening in the head is located above the base body top surface,
- the shaft is axially movably received in the tool body bore by being axially slidable, and wherein
- the turning tool further comprises a locking mechanism, which is configured to, in the first axial position, releasably lock the shaft in the tool body bore against at least axial sliding toward the tool body top surface.

Due to the shaft of the clamping pin being mounted axially slidably in the tool body bore, the clamping pin can move axially without changing angular position. Thus, the angular position of the clamping pin can remain constant when the clamping pin is moved axially downward in order to apply a clamping force to the clamping member, and thereby to the clamping arm. Once a desired clamping force has been reached, a locking mechanism can be operated to lock the clamping pin in the tool body bore. Thereby the clamping pin is locked against axial sliding toward the tool body top surface so that a cutting insert can be securely clamped in the insert seat under the clamping arm. In this locked position, the shaft of the clamping pin is in the first axial position in the tool body bore and the first outlet opening in the head of the clamping pin is located above the base body top surface of the clamping member. Thus, unlike in the prior art, a relative angular position of the clamping member and the clamping pin is not restricted by an internal coolant channel in the clamping member that must be kept in fluid communication with a coolant channel in the clamping pin. Instead, the turning tool according to the invention can be constructed to have the first outlet opening in the head facing in any desired direction relative to the direction of the extension of the clamping arm. Therefore, the inventive turning tool enables an independent choice of the clamping force, the angular position of the clamping arm and the angular position of the coolant outlet.

The turning tool according to the present invention comprises a clamping member, a clamping pin, and a tool body with an insert seat, wherein the clamping pin is arranged to force the clamping member and the tool body together such that a cutting insert received in the insert seat is clamped therein. In this application, the location of the insert seat is defined as being in a forward end of the turning tool. When operated to clamp the cutting insert, the direction of the sliding movement of the shaft in the tool body bore is defined as a downward movement. A top surface and a bottom surface are surfaces that face upward and downward, respectively, and in coordination with corresponding directions of the longitudinal axis of the shaft. Similarly, expressions like above and below refer to the direction of the longitudinal axis of the shaft and the downward movement of the shaft there along. Expressions like inward and outward relate to the centre of the tool body. The turning tool according to the present invention is suitable for metal cutting. In other words, the turning tool is suitable for receiving and clamping a cutting insert for cutting metal. Preferably, the turning tool is in addition suitable to receive and clamp a cutting insert for cutting other materials, for example composites.

According to the invention, the locking mechanism is configured to, in the first axial position, releasably lock the shaft in the tool body bore against at least axial sliding toward the tool body top surface. Optionally, the clamping pin is able to move further axially downward beyond the first position also when it is locked. This downward direction is a direction that enhances the clamping force on a cutting insert received in the insert seat. In some applications it is not critical if the clamping force is exceeded. Such embodiments can be beneficial in that the locking mechanism can be of a simple, less costly type.

According to at least one embodiment, the locking mechanism is configured to be operated from below the tool body. In such an example embodiment, the tool body bore is a through hole. The clamping pin has a shaft that extends through both the through hole in the base body of the clamping member and in the tool body. According to such embodiments, the locking mechanism includes a lower end of the shaft, which protrudes outside the through hole below a bottom surface of the tool body, and a stop member.

In other embodiments, the lower end of the shaft is located inside the tool body bore so that the shaft does not protrude beyond the bottom surface of the tool body. The tool body bore can be a blind hole. The tool body bore is located spaced apart from the insert seat in the tool body. In other words, the tool body bore is located outside the space occupied by cutting insert when clamped.

According to at least one embodiment, the locking mechanism is configured to, in the first axial position, releasably lock the shaft in the tool body bore against axial sliding in both axial directions. Such a locking mechanism achieves that the cutting insert is clamped by a constant clamping force, which clamping force advantageously can be chosen to fit the cutting insert in question and the cutting operation to be performed. Another advantage is that the axial position of the first outlet opening is fixed in the first position.

According to at least one embodiment, the locking mechanism is configured to, in the first axial position, releasably lock the shaft in the tool body bore against relative rotation. This can be achieved inherently by a sufficiently large clamping force and friction between the clamping pin and the clamping member, or, between the clamping pin and parts of the locking mechanism.

Preferably, the locking mechanism is configured to, in the first axial position, releasably lock the shaft in the tool body bore against relative rotation by positive locking. Positive locking is to be understood as surfaces shaped to prevent relative rotation. For example, the shaft has a polygonal cross section that fits into a corresponding polygonal cross section of the tool body bore. Alternatively, the locking mechanism comprises a protrusion on the shaft that engages with a mating recess or stop member in the tool body bore or on a sperate member, or, vice versa.

These embodiments are advantageous in that the angular position of the first outlet opening is fixed in the first position. Thereby a more exact direction of a coolant fluid stream exiting the first outlet can be achieved.

Preferably, the locking mechanism is configured to, in the first axial position, releasably lock the shaft in the tool body bore against axial sliding in both axial directions and against relative rotation. Thereby, it is possible to provide a fixed location of the first outlet opening in the first position and thus also a fixed direction of a fluid coolant stream exiting therethrough. This also enables the provision of a fixed clamping force.

According to at least one embodiment, the shaft has a cylindrical outer surface and the tool body bore has a cylindrical inner surface. The radiuses of the surfaces are preferably close to the same so that the shaft fits slidably and rotatably in the bore. Preferably, the shaft of the clamping pin extends through the clamping member through hole with play, or at least such that it is axially slidable and rotatable. Thereby the exact angular position of the first outlet opening can be adjusted by rotating the clamping pin in the tool body bore, for example before the clamping pin is brought to the first axial position for clamping a cutting insert. In embodiments where the locking mechanism allows for rotation of the shaft also when locked in the first position, the angular position of the first outlet opening can advantageously be adjusted also when a cutting insert is clamped in the insert seat, for example by exceeding a certain force.

According to at least one embodiment, the tool body comprises a first tool body side surface, which extends downward from the tool body top surface at one side thereof, and wherein the locking mechanism comprises
- a tool body side hole comprising a first portion connecting the first tool body side surface with the tool body bore,
- an abutment surface at the shaft,
- an actuation bar, which is movably mounted in the first portion of the tool body side hole and relative to the shaft, and which comprises, at an inner portion, an engagement section having an engagement surface for interacting with the abutment surface,
and wherein the actuation bar is operable to, when the shaft is in the first axial position, to move to a locking position, in which the engagement surface presses against the abutment surface to lock the clamping pin in the first axial position. This embodiment is advantageous in that the locking mechanism can be operated from the side of the turning tool while the clamping member at the same time provides a clamping force to the cutting insert from above. With prior art turning tools, in some applications such as for example when the turning tool is mounted in a multi-spindle machine, access from above in order to release or tighten a clamp can be difficult or even impossible. The turning tool then disadvantageously has to be dismounted and removed from the machine when a cutting insert is to be indexed or exchanged.

According to at least one embodiment, the engagement section with the engagement surface of the actuation bar and the abutment surface of the shaft are constructed to lock through friction. The engagement surface is for example an end surface of the actuation bar and the abutment surface is a portion of an outer surface of the shaft.

Preferably, locking is achieved in that the engagement section geometrically blocks an upward movement of the shaft. The engagement surface of the engagement section is arranged to abut against an upward facing abutment surface of the shaft, which abutment surface is located in a position below the engagement section. For example, the locking mechanism further comprise a shaft recess, which, from a shaft entrance opening, extends transverse to the longitudinal axis of the shaft, wherein,
- in the first axial position, the shaft entrance opening faces the first portion of the tool body side hole, and wherein
- the abutment surface is an upward facing surface in the recess, and wherein, when the actuation bar is in the locking position, the engagement section is located in the shaft recess. Due to the position of the engagement section and the abutment surface, the engagement surface is configured to press against the abutment surface inside the recess and thereby prevent upward movement of the clamping pin. Preferably, the engagement section is also in engagement with a side wall of the shaft recesses in order to provide positive locking of relative rotation between the shaft and the tool body bore.

The actuation bar can extend outside the first portion of tool body side hole and have a portion that protrudes beyond the first side surface, or the actuation bar can terminate inside the first portion of tool body side hole. An operator can operate the actuation bar directly or by means of a tool, such as a screw driver or wrench. Preferably, the actuation bar constitutes a single integral bar, wherein the engagement section is an inner portion, for example an inner end. In such embodiments, the engagement surface follows any movement of the actuation bar.

Preferably, the actuation bar has a longitudinal axis that is aligned with the first portion of the tool body side hole. The actuation bar is movably mounted in the first portion of the tool body side hole by for example being axially movable and/or rotatable around the longitudinal axis. For example, the actuation bar can be axially slidable or can comprise a male thread that is in engagement with a female thread in the first tool body side hole.

The actuation bar can be movably mounted relative the shaft by for example being axially movable toward and away from the shaft, or by being axially movable inside a recess in the shaft. Therein, the engagement section is located in the shaft recess and/or is arranged movably in and out thereof. Alternatively or in addition, the actuation bar is movable relative the shaft by being rotatable. The engagement section may be axially movable and/or rotatable inside the shaft recess.

In an embodiment wherein the actuation bar is rotatable, the engagement section comprises an eccentric portion, such as a cam, on which the engagement surface is arranged. In order to bring the actuation bar to its locking position, the actuation bar is axially poisoned to axially align the engagement surface on the eccentric portion with the abutment surface in the recess, and rotated until the two surfaces engage.

Preferably, the abutment surface is an upward facing wedge surface that tapers toward the shaft entrance opening, the engagement surface comprises a downward facing wedge surface that tapers inward, and, when the actuation bar is operated to move to the locking position, the engagement section moves inward in the shaft recess, whereby the engagement surface slides and presses against the abutment surface to force the shaft into the first axial position. This embodiment and an embodiment comprising an eccentric engagement surface are examples of embodiments that are advantageous in that the locking mechanism also functions as a mechanism for forcing the clamping pin downward for bringing the shaft into the first position. Thus, the locking mechanism is a mechanism for tightening and locking the clamping pin.

As seen in a cross section comprising the longitudinal axis of the shaft and a central longitudinal axis of the first portion of the tool body side hole, the abutment surface and the engagement surface form an angle α with the central longitudinal axis of the first portion of the tool body side hole of at least 3° and at most 45°. This range ensures that an inward movement of the actuation bar over a convenient length translates to an axially downward movement of the shaft that corresponds to a suitable clamping force. A larger angle could risk that the force necessary for moving the actuation bar inward becomes too large. With a smaller angle, the engagement surface would have to be inconveniently long. Preferably, the angle α is at least 10 ° and at most 30°.

According to a preferred embodiment, the shaft recess is a through hole with a central longitudinal axis, which intersects the central longitudinal axis of the first portion of the tool body side hole axis with the same angle α. Thereby advantageously the tapering abutment surface is created directly when producing the shaft recess by drilling an inclined cylindrical hole through the shaft. In other embodiments, the shaft recess is a blind hole or an open channel. The recess can have any suitable cross section. The abutment surface may be a curved surface, as for example a part of a cylindrical shaft hole wall. In other embodiments, the abutment surface is a plane. The engagement surface may also be curved, such as for example a part of a cone surface, or planar.

Generally, the shape and relative position of the abutment surface and the engagement surface are designed to provide the desired locking in the first position of the shaft, and possibly in addition, to convert movement of the actuation bar to downward sliding of the shaft.

In the first axial position, the first outlet opening in the head is located above the base body top surface, or in other words, above the opening in the base body top surface of the clamping member through hole. In embodiments, the first outlet opening is located above any portion of the clamping member in the direction toward the insert seat. Preferably, the entire first outlet opening is such located. Usually, the first outlet opening is directed forward toward the insert seat, wherein, when a cutting insert is clamped in the insert seat, a coolant fluid stream exiting through the first outlet opening will wash over at least a part of the cutting insert. In embodiments, the stream of coolant fluid does not contact the clamping member before intersecting the cutting insert. In other embodiments, the coolant fluid stream is directed by the top surface of the clamping arm. The first outlet opening can be provided with a nozzle.

According to at least one embodiment, the head has a longitudinally extending front side surface, wherein the first outlet opening is located in the front side surface, the coolant fluid channel comprises a first internal exit channel, which exit channel has a central longitudinal axis and extends from an inner position in the head to the first outlet opening, and the central longitudinal axis of the first exit channel and the longitudinal axis of the shaft form a sharp angle β. Thus, the inner position in the head is located axially above the first outlet opening. Preferably, the sharp angle β has a value of 45° or more. Preferably, an extension of the central longitudinal axis of the first exit channel intersects a point where, when a cutting insert is clamped in the insert seat, an active cutting edge of the cutting insert is located. These embodiments are advantages in that the exit channel is able to direct the coolant fluid toward a desired position without additional means such as a nozzle.

According to at least one embodiment,
- the tool body comprises a second tool body side surface, which extends downward from the tool body top surface on an opposite side of the first tool body side surface,
- the tool body side hole further comprises a second portion connecting the second tool body side surface with the tool body bore,
- the shaft is axially slidable in the tool body bore in two angular positions spaced apart by 180° so that, in the first axial position, the shaft entrance opening selectively faces either the first portion of the tool body side hole or the second portion of the tool body side hole,
- the coolant fluid channel has a second outlet opening in the head, which second outlet opening is angularly spaced apart from the first outlet opening by 180°,
- and wherein the actuation bar selectively either is movably mounted in the first portion or in the second portion of the tool body side hole, and in both locations operable to, when the shaft is in the first axial position
with a matching angular position, to move to the locking position.

According to such an embodiment, the tool body side hole including the first and second portions is mirror symmetrical over a central longitudinal plane, which is located between the first and the second tool body side surfaces and comprises the longitudinal axis of the shaft.

An exit channel comprising the first and a second exit channel which extends from an inner position in the head to the second outlet opening, may also be mirror symmetrical., for example over a transverse plane that is perpendicular to the central plane.

These embodiments are advantageous in that the locking mechanism of the turning tool can be operated from both sides of the tool body. Preferably, the tool body side hole is a through hole, which advantageously can be drilled. Optionally, the inactive portion of the tool body side hole and/or the inactive outlet opening in the head can be plugged.

According to at least one embodiment, the clamping pin has a cylindrical shaft and a head that protrudes radially from the shaft. The head may be concentric with the longitudinal axis of the shaft. The head comprises a downward facing clamping surface. The clamping pin is configured to, in the first axial position, engage the base body and force the base body toward the tool body top surface by means of the downward facing clamping surface abutting against the base body top surface.

The coolant fluid channel of the shaft may be an internal channel, may constitute a space between the tool body bore and the shaft. The coolant channel may comprise different portions along the axial extension of the shaft, wherein the coolant channel is an internal channel along a first portion and a space between the tool body bore and the shaft along a second portion. An exit channel in the head can be in fluid communication with an inlet opening in the shaft or in the head. In a preferred embodiment, the inlet opening is located in a downward facing surface in the shaft recess. The coolant fluid channel of the clamping pin is normally in fluid communication with a coolant fluid channel in the tool body which, in turn, is in fluid communication with a coolant fluid source.

According to embodiments, the clamping member is a separable component, which can be dismounted and removed from the tool body. According to other embodiments, the clamping member and the tool body are formed as one integral piece. Such embodiment of the turning tool may comprise a weakened portion that functions as a living hinge for the clamping member.

According to at least one embodiment, the clamping member is biased toward a relaxed state in which, in absence of a clamping force from the clamping pin, the clamping member can be lifted up from the tool body so that a cutting insert received in the insert seat can be removed or indexed. The biasing force may be applied by means of a compression spring that in one end bears against the base body bottom surface and, in the other end, against the tool body top surface or a shoulder surface at the shaft. In embodiments where the clamping member and the tool body are integral, the biasing force can be inherent. When the clamping pin is moved to the first axial position for clamping a cutting insert, this biasing force has to be overcome.

According to another aspect of the invention, the turning tool according to any of the embodiments described above comprises a cutting insert received in the insert seat.

### Brief description of the drawings

In the following, example embodiments will be described in greater detail and with reference to the accompanying drawings, in which:
Fig. 1 is an exploded perspective view of a first embodiment of the turning tool according to the present invention;
Fig. 2 is a perspective view from above of the first the first embodiment of the turning tool;
Fig. 3 is a perspective view from below of the first the first embodiment of the turning tool;
Fig. 4 is a top view of the first the first embodiment of the turning tool;
Fig. 5 is a cross sectional view along V-V of the first embodiment of the turning tool according to Fig. 4;
Fig. 6 is a cross sectional view along VI-VI of the first embodiment of the turning tool according to Fig. 4, when locked in a first position;
Fig. 7 is a cross sectional view along VI-VI of the first embodiment of the turning tool according to Fig. 4, when released from the first position;
Fig. 8 is an exploded perspective view of a second embodiment of the turning tool according to the present invention;
Fig. 9 is a cross sectional view of the second embodiment of the turning tool corresponding to the view of Fig. 5, when released from the first position;
Fig. 10 is a cross sectional view of the second embodiment of the turning tool corresponding to the view of Fig. 5, when locked in the first position;
Fig. 11 is an exploded perspective view of a third embodiment of the turning tool according to the present invention;
Fig. 12 is a cross sectional view of the third embodiment of the turning tool corresponding to the view of Fig. 5, when released from the first position;
Fig. 13 is a cross sectional view of the third embodiment of the turning tool corresponding to the view of Fig. 5, when locked in the first position;
Fig. 14 is a cross sectional view of a fourth embodiment of the turning tool according to the present invention corresponding to the view Fig 5.

All the figures are schematic, not necessarily to scale, and generally only show parts which are necessary in order to elucidate the respective embodiments, whereas other parts may be omitted or merely suggested. Unless otherwise indicated, like reference numerals refer to like or corresponding parts in different figures.

### Detailed description

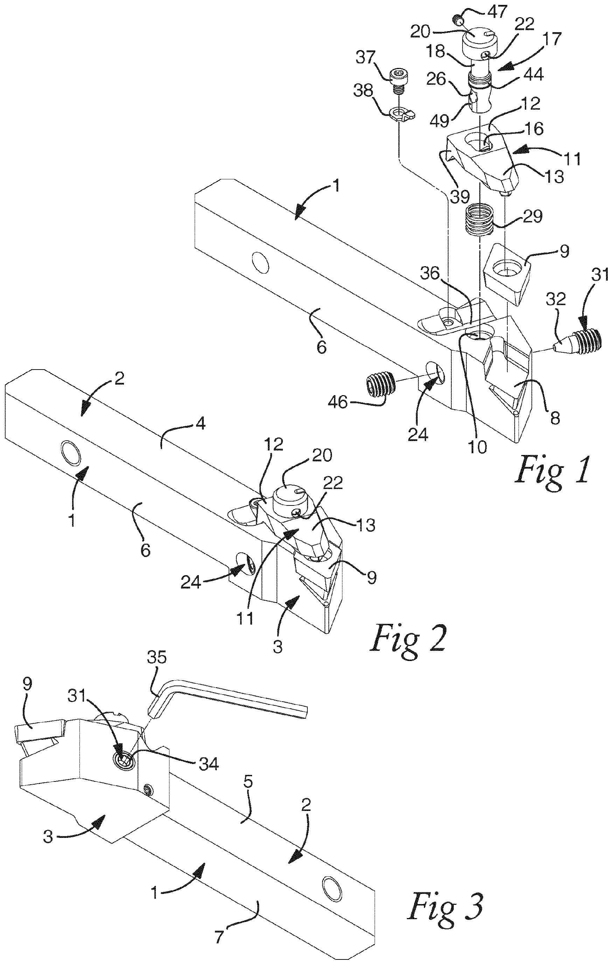

With reference to Figs. 1- 7, a first embodiment of a turning tool according to the present invention will be described. The turning tool comprises a tool body 1. The tool body 1 comprises a shaft portion 2 and a head portion 3. In other embodiments, the tool body 1 can comprise a head potion 3 only.

The tool body 1 has a top surface 4, a first side surface 5, a second side surface 6 and a bottom surface 7. At a front end, the tool body has an insert seat 8 for receiving a cutting insert 9. The insert seat 8 is a recess in the top surface 4 and comprises support surfaces that, when a cutting insert 9 is clamped in the insert seat 8, ensure that the cutting insert 9 is accurately positioned for exposing a cutting edge in a desired location.

A tool body bore 10 extends into the tool body 1 from the top surface 4 in a downward direction toward the bottom surface 7. The tool body bore 10 is a blind hole and has a circular cross section. The tool body bore 10 is spaced apart from the insert seat 8, or in other words, located outside, in this embodiment rearward in a direction toward the shaft portion 2, of the space occupied by the cutting insert 9. The tool body bore 10 comprises an upward facing shoulder surface 27, which extends circumferentially at an upper end so that the tool body bore 10 has portion with larger diameter at an upper end. An inlet opening 45 for coolant fluid is provided at a lower end of the tool body bore 10. The inlet opening 45 is connectable to an external coolant fluid source through tool body coolant fluid channelling 48.

The top surface 4 is provided with a depression 36, which is located rearward of the tool body bore 10 in the direction toward the shaft portion 2. A clip 38 is attached in the depression 36 by means of a screw 37.

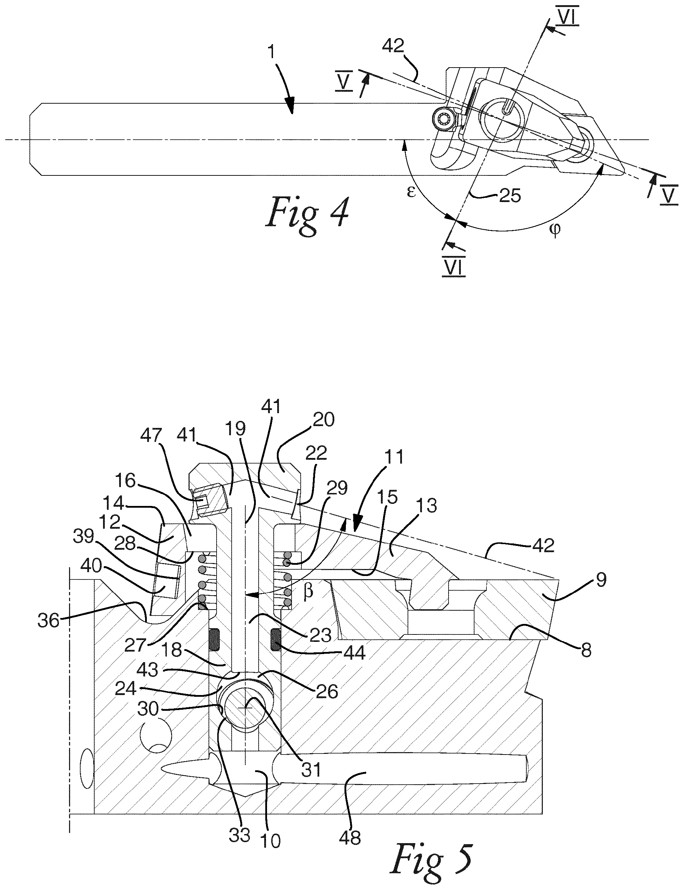

The turning tool further comprises a locking mechanism including a tool body side hole 24. The tool body side hole 24 comprises a first portion connecting an opening in the first tool body side surface 5 with the tool body bore 10 and a second portion connecting an opening in the second tool body side surface 6 with the tool body bore 10. Both portions of the tool body side hole 24 have an internal female thread. The tool body side hole 24 has a central longitudinal axis 25 which, as seen in a top view according to Fig. 4, extends transversely across the tool body at an angle ε to the extension of the shaft portion 2 of the tool body 1. This angle ε is chosen to provide accessibility of the locking mechanism at the head portion 3 and is in this embodiment 65°. In other embodiments the angle can be 45 - 135°, preferably 60 - 120°.

The turning tool further comprises a clamping member 11, which comprises a base body 12 and a clamping arm 13. The clamping arm 13 protrudes from the base body 12 in a forward direction and extends at least a portion over the insert seat 8. The base body has a base body top surface 14 and a base body bottom surface 15.

A clamping member through hole 16 extends through the clamping member 11 from an opening in the base body top surface 14 to an opening in the base body bottom surface 15. The clamping member through hole 16 has an oval cross section, wherein the long axis extends generally in the direction of the protruding clamping arm 13. The clamping member through hole comprises a downward facing shoulder surface 28, which extends circumferentially at a lower end so that the clamping member through hole 16 has a portion with a larger diameter at a lower end.

The base body 12 has a flange 39 in an end opposite to the protruding clamping arm 13. The flange 39 extends downward from the base body bottom surface 15 and has a rear surface provided with a groove 40.

The clamping member is arranged above the tool body 1 so that that the base body bottom surface14 and the tool body top surface 4 face each other, the clamping member through hole 16 is aligned with the base body bore 10, the clamping arm 13 extends over a portion over the insert seat 8, and the flange 39 is located in the depression 36 . The clamping member 11 is attached to the tool body by means of the clip 38 loosely engaging the groove 40.

The turning tool further comprises a clamping pin 17 which comprises a longitudinal shaft 18 extending along a longitudinal axis 19. At an upper end of the shaft 18, the clamping pin 17 has a head 20, which protrudes radially from the shaft 18. The head 20 is concentric with the longitudinal axis 19 of the shaft 18, which is cylindrical. The head 20 comprises a downward facing clamping surface 21 and a front side surface 55 constituting a portion of a circumferential side surface of the head 20.

A shaft recess in form of a through hole 26 that extends transverse through the shaft 18 is also part of the locking mechanism. The through hole 26 has an abutment surface in form of an upward facing hole wall 30. The through hole 26 has a central longitudinal axis 56 which intersects the longitudinal axis 19 with an obtuse angle, an entrance opening at the axially lower side of the through hole 26 and exit opening at the axially upper side of the through hole 26.

The clamping pin 17 comprises a coolant fluid channel 23 that has a first outlet opening 22 and a second outlet opening 22 in the circumferential surface of the head 20. The coolant fluid channel 23 comprises a first internal exit channel 41 and a second internal exit channel 41. The first and second exit channels each have a central longitudinal axis 42 and each extend from an inner position in the head 20 to the respective first and second outlet openings 22. The inner position in the head 20 is a central position located axially above the outlet openings 22. The central longitudinal axis 42 of the first exit channel 41 and the longitudinal axis 19 of the shaft 18 form a sharp angle β of more than 45°, in this embodiment 77°. As seen in an axial end view of the clamping pin 17, c.f. Fig. 4, the central longitudinal axis 42 of the first exit channel intersects the central longitudinal axis of the through hole 26 (and the central longitudinal axis 25 of the first portion of tool body side hole 24) with a predetermined angle ϕ. This angle is chosen to both provide accessibility of the locking mechanism (which will be described below) and a desired direction of an exiting coolant fluid stream. Usually the angle ϕ is 70 - 110 °, and in this embodiment 90°. As can be seen, the direction of the exiting coolant fluid stream differs from the extension of the clamping arm 13.

The coolant fluid channel 23 comprises a longitudinally extending internal portion in the shaft 18, which internal portion has a coolant fluid inlet opening 43 in a downward facing hole wall of the through hole 26.

The clamping pin 17 is arranged with the shaft 18 thereof extending through the clamping member through hole 16 and into the tool body bore 10, wherein the shaft 18 is axially movably received in the tool body bore 10. The entrance opening of the through hole 26 has an overlap with an inner opening of the first portion of the tool body side hole 24. The shaft, between the lower end and the shaft exit opening of the through hole 26, has an outer surface portion 49 which is located at a distance to the longitudinal axis 19 that is smaller than the radius of the tool body bore. As seen in a cross section comprising the longitudinal axis 19 of the shaft 18 and a central longitudinal axis 25 of the first portion of the tool body side hole 24, the abutment surface in form of the upward facing part of the hole wall 30 forms an angle α of 18° with the central longitudinal axis 25 of the first portion of tool body side hole 24. In other words, this part of the hole wall 30 constitutes an upward facing wedge surface that tapers toward the shaft entrance opening.

The downward facing clamping surface 21 of the head 20 faces the base body top surface 14 of the clamping member 11. The first outlet opening 22 of the first internal exit channel 41 faces toward the insert seat 8, and the second internal exit channel 41 is closed by a plug 47. A helical spring 29 is arranged around the shaft 18 and abuts, in one end, against the upward facing shoulder surface 27 in the tool body bore 10 and, in the other end, against the downward facing shoulder surface 28 in the clamping member through hole 16. A sealing ring 44 surrounds the shaft 18 and provides a fluid tight seal in the tool body bore 10 while allowing axial movement of the shaft 18.

The locking mechanism further comprises an actuation bar 31, which comprises an engagement section 32 at an inward end. The outer end of the actuation bar is cylindrical and has an external male thread. The engagement section 32 constitutes a truncated cone with the truncated end pointing inward. At a transition to the truncated cone, the outer end of the actuation bar 31 has a diameter that approximately corresponds the diameter of the entrance opening of the through hole 26 in the shaft 18. The engagement section 32 comprises an engagement surface in form of the outer surface 33 of the truncated cone. The outward end surface of the actuation bar is provided with a hexagonal socket 34 facing away from the truncated cone.

The actuation bar 31 is mounted in the first portion of the tool body side hole 24, wherein the male thread of the outer end is in engagement with the female thread in the first portion of tool body side hole 24. As seen in a cross section comprising the longitudinal axis 19 of the shaft 18 and a central longitudinal axis 25 of the first portion of tool body side hole 24, the engagement surface in form of the outer cone surface forms an angle α of 18° with the central longitudinal axis 25 of the first portion of tool body side hole 24. In other words, the engaging part of the cone surface constitutes a downward facing wedge surface that tapers inward.

The hexagonal socket 34 can be reached through the opening in the first side surface 5 of the tool body 1 by means of a hex key 35. The second portion of the tool body side hole 24 is closed by a plug 46.

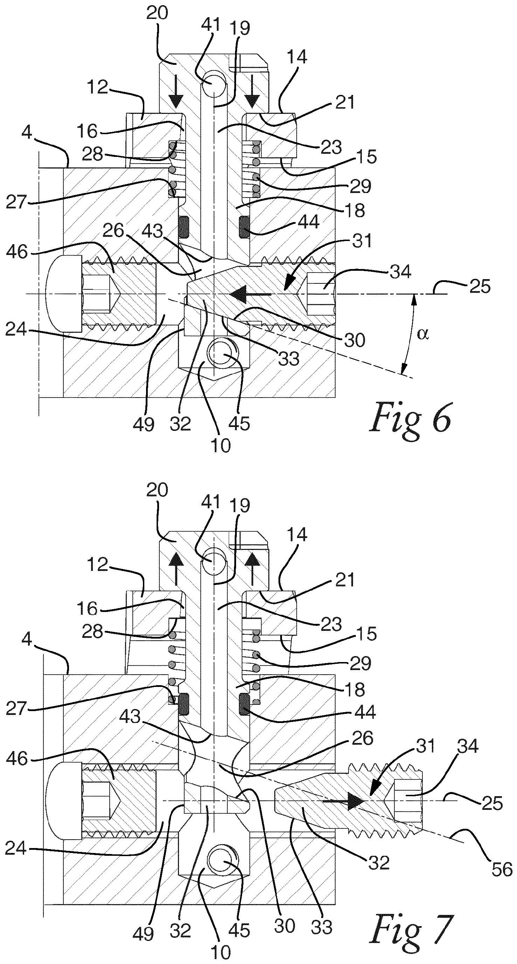

The steps of mounting a cutting insert 8 in the insert seat of the first embodiment of the turning tool will now be described mainly with reference to Figs. 6-7.

Due to the spring 29 and a play allowed for by the clip 38 in the groove 40, the clamping member is held biased upward to a position wherein a cutting insert 9 can be placed in the insert seat 8 below the clamping arm 13. After placing the cutting insert, the hex key 35 is inserted in the first portion of the tool body side hole 24 and brought into engagement with the socket 34. By rotating the hex key 35 clockwise, the actuation bar 31 is screwed inward in the first portion of the tool body side hole 24. Therein the external male thread of the actuation bar 31 engage with the internal female thread in the first portion of the tool body side hole 24. The outer surface 33 of the truncated cone thereby moves inward and into the through hole 26 in shaft 18 and engages with the abutment surface in form of the upward facing hole wall 30. As the actuation bar 31 is operated and screwed further inward, the outer surface 33 of the truncated cone slides and presses against the abutment surface 30, whereby the shaft 18 is forced to slide axially downward in the tool body bore 10 against the biasing force from the spring 29. Eventually, the downward facing clamping surface 21 of the head 20 engages the base body top surface 14 and forces the base body 12, together with the protruding clamping arm 13, toward the tool body top surface 4. This causes the flange 39 of the base body to slide against a surface in the depression 36 thereby pulling the clamping member 11 rearward in the direction toward the shaft portion 2 of the tool body 1. This relative movement of the clamping member 11 and the shaft 18 is enabled by the oval cross section of the clamping member through hole 16.

Due to the actuation bar 31 causing the shaft 18 of the clamping pin 17 to slide axially downward in the tool body bore 10, the clamping arm 13 engages the cutting insert 9 in the insert seat 8 and forces the cutting insert 9 downward and rearward against the support surfaces in the insert seat 8. When the clamping pin 17 has reached a first axial position, the cutting insert 9 is clamped in the insert seat 8 and the cutting edge is exposed in the desired location. Furthermore, due to that the portion of the actuation bar 31 with a diameter of approximately the same diameter as the entrance opening of the through hole 26 in the shaft 18 is located in the entrance opening in the first portion, the shaft 18 is releasably locked against axial sliding in both directions. In addition, the clamping pin is advantageously locked against relative rotation to the tool body 1 by positive locking through the actuation bar 31 abutting against the side surface 30 of the through hole 26. Clamping of the cutting insert 9 in the insert seat 8 is advantageous achieved by operating the actuation bar 31 from the side of the turning tool while the clamping pin 11 provides clamping force from above.

Coolant fluid is provided by connecting the inlet opening 45 at the lower end of the tool body bore 10 to the external coolant fluid source, via the tool body coolant channelling 48. When the shaft 18 is in the first axial position, the inlet opening 45 is located below the lower end of the shaft 18. Coolant fluid flows from the inlet opening 45 upward in the tool body bore 10 and over the outer surface portion 49 with reduced diameter at the shaft 18 and into the through hole 26 through the exit opening thereof. Therein, the coolant fluid is prevented from leaking out of the tool body bore 10 by the plug 46 in the second portion of the tool body side hole 24, by the actuation bar in first portion of the tool body side hole 10, and by the sealing ring 27 on the shaft 18. Instead, the coolant fluid is forced to enter the longitudinally extending internal portion of the coolant fluid channel 23 through the inlet opening 43 in the downward facing hole wall of the through hole 26. From an inner position in the head 20, the coolant fluid flows through the first internal exit channel 41 and exits through the first outlet opening 22 in the head 20.

In the first axial position, the first outlet opening 22 in the head 20 is located above the base body top surface 4. Due to pressure provided at the coolant fluid source, and the position and angle of the exit channel 41, the exiting coolant fluid is directed to the edge of the cutting insert 9 clamped in the insert seat 8. The extension of the clamping arm 13 can advantageously be chosen according to preferences and independently from the desired direction of the coolant fluid stream.

The first embodiment of the turning tool described above can advantageously be operated from both the first and the second tool body side surface 5, 6. The tool body side hole 24 including the first and second portions is mirror symmetrical over a central plane, which central plane is located between the first and the second tool body side surfaces and which comprises the longitudinal axis of the shaft 18. The symmetry plane corresponds to the plane shown in Fig. 5. The shaft 18 of the clamping pin 17 is axially slidable in the tool body bore 10 in two angular positions spaced apart by 180° so that, in the first axial position, the shaft entrance opening selectively faces either the first portion of the tool body side hole 24, or the second portion of the tool body side hole 24.

The first outlet openings 22 is angularly spaced apart from the second outlet opening by 180°. Depending on the angular position, one of the first or the second outlet openings 22 in the head face the cutting insert 9 and the other one faces rearward and is plugged by the plug 47.

In other embodiments, the first and the second portions of tool body side hole 24 can be angled relative each other so that they are not linearly aligned. The coolant outlet openings 20 in the head 22 of the clamping pin 17 are then spaced apart by the same angle.

The actuation bar 31 is selectively either movably mounted in the first portion or in the second portion of the tool body side hole 24, wherein, the other of the portions is plugged by the plug 46. Clamping from the second tool body side surface 6 is performed correspondingly to clamping from the first tool body side surface 5 as described above.

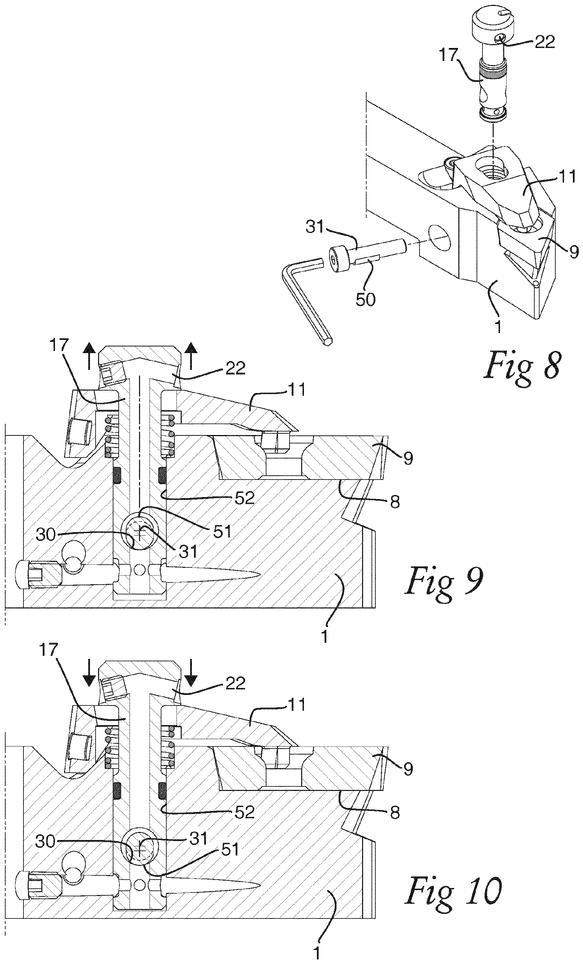

In Figs. 8 - 10, and Figs. 11 - 13, a second and a third embodiment of the present invention are shown, which differ from the first embodiment mainly by the design of the locking mechanism. Therefore, the first and second embodiments are described with respect to their locking mechanisms and related features only.

In the second embodiment of Figs. 8 - 10, the locking mechanism comprises a tool body side hole 24 of similar design as in the first embodiment. Thus, the tool body side hole 24 comprises a first portion connecting an opening in the first tool body side surface 5 with the tool body bore 10 and a second portion connecting an opening in the second tool body side surface 6 with the tool body bore 10.

A shaft recess in form of a through hole 26 that extends transverse through the shaft 18 is also part of the locking mechanism. The through hole 26 has a central longitudinal axis which intersects the longitudinal axis 19 with an angle of about 90° and an entrance opening and an exit opening at the same axial distance from the head 20. The through hole 26 has an abutment surface in form of an upward facing hole wall 30.

The locking mechanism of the second embodiment further comprises an actuation bar 31, which comprises an engagement section 32 at an inner portion. The engagement section comprises an eccentric 50 having a cam surface 51 as engagement surface. The outward end of the actuation bar is cylindrical. The outward end surface of the actuation bar 31 is provided with a hexagonal socket 34 facing away from the eccentric 50.

Both portions of the tool body side hole 10 have a threaded portion for threadedly receiving a plug 46, and a smooth portion for supporting the outer end of the actuation bar 31. The actuation bar 31 is rotatably supported, wherein the outer end thereof is located in the first portion of the tool body side hole 24 and the engagement section inside the through hole 26. The actuation bar 31 is prevented from moving axially by the eccentric 50 abutting against the side wall of the tool body bore 10.

In order to clamp the cutting insert 8 in the insert seat 9, the hex key is inserted in the first portion of the tool body side hole and brought into engagement with the socket 34. By rotating the hex key 35 clockwise, the eccentric 51 rotates in the through hole 26 and engages with the abutment surface in form of the upward facing hole wall 30. As the actuation bar 31 is further rotated, the cam surface 51 slides and presses against the abutment surface 30, whereby the shaft 18 is forced to slide axially downward in the tool body bore 10 against the biasing force from the spring 29. Eventually, the clamping pin 17 reaches the first axial position and is realisably locked therein at least due to friction between the cam surface 51 and the upward facing hole wall 30.

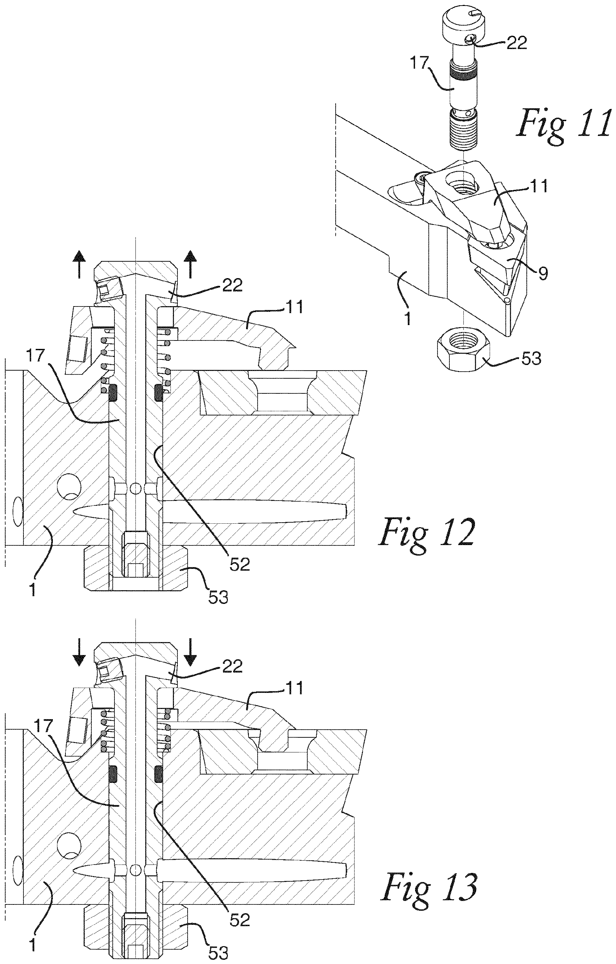

The locking mechanism of the third embodiment as shown in Figs. 11 - 13, comprises a tool body bore in form of a through hole 52. The tool body through hole 52 extends from an opening in the tool body top surface 4 to an opening in the tool body bottom surface 7. The locking mechanism further comprises a threaded portion at the lower end of the shaft 18, and a nut 53.

In order to clamp the cutting insert 8 in the insert seat 9, the clamping pin 17 is pushed downward by pressing against the head 20 until the threaded portion at the lower end of the shaft protrudes past the tool body bottom surface 7. The nut is threaded onto the threads of the threaded portion of the shaft 18. As the nut 53 is further rotated, the nut slides against the bottom surface 7 and the shaft 18 is forced to slide axially downward in the tool body bore 10 against the biasing force from the spring 29. Eventually, the clamping pin 17 reaches the first axial position and is realisably locked therein at least due to friction in the threads, and between the nut 53 and the bottom surface 7.

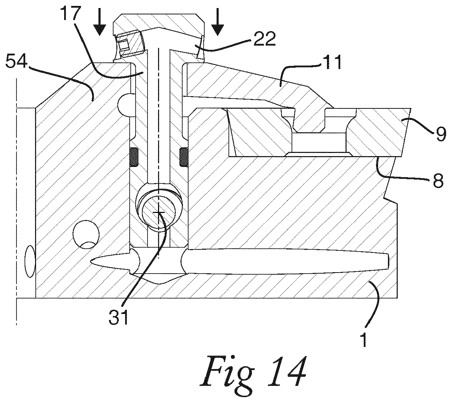

In Fig. 14, a fourth embodiment of the turning tool according to the present invention is shown. The fourth embodiment differs from the embodiment shown in Figs. 1 - 7, in that the clamping member 11 is an integral part of the tool body 1. The tool body comprises a weakened portion 54 that functions as a living hinge and to bias the clamping member away from the tool body top surface 4. The fourth embodiment is shown with a locking mechanism of the same type as described in connection with the first embodiment. However, the fourth embodiment functions with locking mechanism of the second and third embodiments, too.

## Claims

1. A turning tool for metal cutting comprising
- a tool body (1), which has a tool body top surface (4), and which comprises,
- arranged at a front end in the tool body top surface (4), an insert seat (8) for receiving a cutting insert (9), and
- a tool body bore (10) that is spaced apart from the insert seat (8) and extends downward from an opening in the tool body top surface (4),
- a clamping member (11), which is arranged at the tool body top surface (4), and which comprises
- a base body (12), which has
- a base body top surface (14), and a base body bottom surface (15) facing the tool body top surface (4), and
- a clamping member through hole (16), which extends from an opening in the base body top surface (14) to an opening in the base body bottom surface (15), and which is aligned with the tool body bore (10),
- and a clamping arm (13), which protrudes from the base body (12) and extends at least a portion over the insert seat (8), and
- a clamping pin (17), which connects the tool body (1) and the clamping member (11), and which comprises
- a longitudinal shaft (18) that has a longitudinal axis (19) and that extends through the clamping member through hole (16) and into the tool body bore (10), wherein the shaft (18) is axially movably received in the tool body bore (10) and operable to move to a first axial position,
- a head (20) at an upper end of the shaft (18), and
- a coolant fluid channel (23) having a first outlet opening (22) in the head (20),
wherein
the clamping pin (17) is configured to, in the first axial position, engage the base body (12) and force the base body (12), together with the protruding clamping arm (13), toward the tool body top surface (4), whereby, when a cutting insert (9) is received in the insert seat (8), the cutting insert (9) is clamped in the insert seat (8),
**characterized in that,**
- in the first axial position, the first outlet opening (22) in the head (20) is located above the base body top surface (14),
- the shaft (18) is axially movably received in the tool body bore (10) by being axially slidable, and **in that**
- the turning tool further comprises a locking mechanism, which is configured to, in the first axial position, releasably lock the shaft (18) in the tool body bore (10) against at least axial sliding toward the tool body top surface (4).

2. The turning tool for metal cutting according to claim 1, wherein the locking mechanism is configured to, in the first axial position, releasably lock the shaft (18) in the tool body bore (10) against relative rotation by positive locking

3. The turning tool for metal cutting according to claim 1 or 2, wherein the tool body (1) comprises a first tool body side surface (5), which extends downward from the tool body top surface (4) at one side thereof, and wherein the locking mechanism comprises
- a tool body side hole (24) comprising a first portion connecting the first tool body side surface (5) with the tool body bore (10),
- an abutment surface at the shaft (18), and
- an actuation bar (31), which is movably mounted in the first portion of the tool body side hole (24) and relative to the shaft (18), and which comprises, at an inner portion, an engagement section (32) having an engagement surface for interacting with the abutment surface,
and wherein
the actuation bar (31) is operable to, when the shaft (18) is in the first axial position, to move to a locking position, in which the engagement surface presses against the abutment surface to lock the clamping pin (17) in the first axial position.

4. The turning tool for metal cutting according to claim 3, wherein the locking mechanism further comprises a shaft recess, which, from a shaft entrance opening, extends transverse to the longitudinal axis (19) of the shaft (18), wherein,
- in the first axial position, the shaft entrance opening faces the first portion of the tool body side hole (24), and wherein
- the abutment surface is an upward facing surface in the recess, and
wherein,
when the actuation bar (31) is in the locking position, the engagement section (32) is located in the shaft recess.

5. The turning tool for metal cutting according to claim 4, wherein
- the abutment surface is an upward facing wedge surface that tapers toward the shaft entrance opening,
- the engagement surface comprises a downward facing wedge surface that tapers inward,
- and wherein, when the actuation bar (31) is operated to move to the locking position, the engagement section (32) moves inward in the shaft recess, whereby the engagement surface slides and presses against the abutment surface to force the shaft (18) into the first axial position.

6. The turning tool for metal cutting according to claim 5, wherein, as seen in a cross section comprising the longitudinal axis (19) of the shaft (18) and a central longitudinal axis (25) of the first portion of tool body side hole (24), the abutment surface and the engagement surface form an angle α with the central longitudinal axis (25) of the first portion of tool body side hole (24) of at least 3° and at most 45°.

7. The turning tool for metal cutting according to claim 6, wherein the shaft recess is a through hole (26) with a central longitudinal axis (56), which intersects the central longitudinal axis (25) of the first portion of the tool body side hole (24) with the same angle α.

8. The turning tool for metal cutting according to any claim 5 - 7, wherein
- the engagement surface comprises a surface (33) that is shaped as a truncated cone,
- the actuation bar (31) comprises a male thread that is in engagement with a female thread in the first portion of the tool body side hole (24),
- and wherein, when the actuation bar (31) is operated to move to the locking position, the actuation bar (31) is screwed inward.

9. The turning tool for metal cutting according to claim 7, or, claim 7 and 8, wherein
- the tool body bore (10) comprises a coolant fluid inlet opening, wherein, when the shaft (18) is in the first axial position, the coolant fluid inlet opening is located below a lower end of the shaft (18),
- the coolant fluid channel (23) of the clamping pin (17) is an internal channel having a coolant fluid inlet opening located in a downward facing surface in the shaft recess in form of the through hole (26), and wherein
- the shaft (18), between the lower end and a shaft exit opening of the through hole (26), has an outer surface portion which is located at a distance to the longitudinal axis (19) that is smaller than the radius of the tool body bore (10) to allow coolant fluid to pass by the shaft (18) in the tool body bore (10) from the inlet opening of tool body bore (10) to the inlet opening of the internal channel of the clamping pin (17).

10. The turning tool for metal cutting according to any preceding claim, wherein
- the head (20) has longitudinally extending front side surface, wherein the first outlet opening (22) is located in the front side surface,
- the coolant fluid channel (23) comprises a first internal exit channel (41), which exit channel (41) has a central longitudinal axis (42) and extends from an inner position in the head (20) to the first outlet opening (22), and wherein
- the central longitudinal axis (42) of the first exit channel (41) and the longitudinal axis (19) of the shaft form a sharp angle β which has a value of 45° or more.

11. The turning tool for metal cutting according to claim 10, wherein
- an extension of the central longitudinal axis (42) of the first exit channel (41) intersects a point where, when a cutting insert (9) is clamped in the insert seat (8), an active cutting edge of the cutting insert (9) is located.

12. The turning tool for metal cutting according to any claim 3 - 9, or, 3 and 10, or, 3 and 11, wherein
- the tool body (1) comprises a second tool body side surface (6), which extends downward from the tool body top surface (4) on an opposite side of the first tool body side surface (5),
- the tool body side hole (24) further comprises a second portion connecting the second tool body side surface (6) with the tool body bore (10),
- the shaft (18) is axially slidable in the tool body bore (10) in two angular positions spaced apart by 180° so that, in the first axial position, the shaft entrance opening selectively faces either
- the first portion of the tool body side hole (24), or
- the second portion of the tool body side hole (24),
- the coolant fluid channel (23) has a second outlet opening (22) in the head (20), which second outlet opening (22) is angularly spaced apart from the first outlet opening (22) by 180°,
- and wherein the actuation bar (31) selectively either is movably mounted in the first portion or in the second portion of the tool body side hole (24), and in both locations operable to, when the shaft (18) is in the first axial position with a matching angular position, to move to the locking position.

13. The turning tool for metal cutting according to any preceding claim, wherein the clamping member (11) is a separable component.

14. The turning tool for metal cutting according to any preceding claim, wherein clamping member (11) is biased away from the tool body top surface (4).

15. The turning tool for metal cutting according to any preceding claim, wherein the turning tool further comprises a cutting insert (9) received in the insert seat (8).

## Patentansprüche

1. Drehwerkzeug für die Metallbearbeitung, das Folgendes aufweist
- einen Werkzeugkörper (1) mit einer oberen Werkzeugkörperfläche (4), der Folgendes aufweist,
- an einem vorderen Ende in der oberen Werkzeugkörperfläche (4) einen Einsatzsitz (8) zur Aufnahme eines Schneideinsatzes (9), und
- eine Werkzeugkörperbohrung (10), die von dem Einsatzsitz (8) beabstandet ist und sich von einer Öffnung in der oberen Werkzeugkörperfläche (4) nach unten erstreckt,
- ein Halteelement (11), das an der oberen Werkzeugkörperfläche (4) angeordnet ist und das
- einen Grundkörper (12) aufweist, der
- eine obere Grundkörperfläche (14) und eine untere Grundkörperfläche (15) aufweist, die der oberen Werkzeugkörperfläche (4) zugewandt ist, und
- ein Halteelement-Durchgangsloch (16), das sich von einer Öffnung in der oberen Grundkörperfläche (14) zu einer Öffnung in der unteren Grundkörperfläche (15) erstreckt und das mit der Werkzeugkörperbohrung (10) fluchtet,
- und einem Haltearm (13), der aus dem Grundkörper (12) herausragt und sich wenigstens teilweise über den Einsatzsitz (8) erstreckt, und
- einen Haltestift (17), der den Werkzeugkörper (1) und das Halteelement (11) miteinander verbindet, und der
- einen länglichen Schaft (18) mit einer Längsachse (19) aufweist, der sich durch das Durchgangsloch (16) des Halteelements und in die Bohrung (10) des Werkzeugkörpers erstreckt, wobei der Schaft (18) axial beweglich in der Bohrung (10) des Werkzeugkörpers aufgenommen ist und betätigt werden kann, um sich in eine erste axiale Position zu bewegen,
- einen Kopf (20) an einem oberen Ende des Schafts (18) und
- einen Kühlmittelkanal (23) mit einer ersten Auslassöffnung (22) in dem Kopf (20),
wobei
der Haltestift (17) so eingerichtet ist, dass er in der ersten axialen Position in den Grundkörper (12) eingreift und den Grundkörper (12) zusammen mit dem vorstehenden Haltearm (13) zur oberen Werkzeugkörperfläche (4) hin drückt, wodurch der Schneideinsatz (9) im Einsatzsitz (8) gehalten wird, wenn ein Schneideinsatz (9) im Einsatzsitz (8) aufgenommen ist,
**dadurch gekennzeichnet, dass**,
- in der ersten axialen Position die erste Auslassöffnung (22) im Kopf (20) oberhalb der oberen Grundkörperfläche (14) angeordnet ist,
- der Schaft (18) in der Werkzeugkörperbohrung (10) axial beweglich aufgenommen ist, indem er axial verschiebbar ist, und dass
- das Drehwerkzeug ferner einen Feststellmechanismus enthält, der so eingerichtet ist, dass er in der ersten axialen Position den Schaft (18) in der Werkzeugkörperbohrung (10) gegen wenigstens axiales Gleiten in Richtung auf die obere Werkzeugkörperfläche (4) lösbar fixiert.

2. Drehwerkzeug für die Metallbearbeitung nach Anspruch 1, wobei der Feststellmechanismus so eingerichtet ist, dass er in der ersten axialen Position den Schaft (18) in der Werkzeugkörperbohrung (10) gegen eine relative Drehung durch Formschluss lösbar fixiert.

3. Drehwerkzeug für die Metallbearbeitung nach Anspruch 1 oder 2, wobei der Werkzeugkörper (1) eine erste seitliche Werkzeugkörperfläche (5) aufweist, die sich von der oberen Werkzeugkörperfläche (4) an einer Seite davon nach unten erstreckt, und wobei der Feststellmechanismus
- ein seitliches Werkzeugkörperloch (24), das einen ersten Abschnitt aufweist, der die erste seitliche Werkzeugkörperfläche (5) mit der Werkzeugkörperbohrung (10) verbindet,
- eine Anschlagfläche am Schaft (18), und
- eine Betätigungsstange (31), die in dem ersten Abschnitt des seitlichen Werkzeugkörperlochs (24) und relativ zu dem Schaft (18) beweglich montiert ist und die an einem inneren Abschnitt einen Eingriffsabschnitt (32) mit einer Eingriffsfläche zum Zusammenwirken mit der Anlagefläche aufweist,
und wobei
die Betätigungsstange (31) betätigbar ist, um sich, wenn sich die Welle (18) in der ersten axialen Position befindet, in eine Feststellposition zu bewegen, in der die Eingriffsfläche gegen die Anschlagfläche drückt, um den Haltestift (17) in der ersten axialen Position festzuhalten.

4. Drehwerkzeug für die Metallbearbeitung nach Anspruch 3, wobei die Feststelleinrichtung ferner eine Schaftausnehmung aufweist, die sich von einer Schafteintrittsöffnung aus quer zur Längsachse (19) des Schafts (18) erstreckt,
wobei,
- in der ersten axialen Position die Schafteintrittsöffnung dem ersten Abschnitt des seitlichen Werkzeugkörperlochs (24) zugewandt ist, und wobei
- die Anschlagfläche eine nach oben weisende Fläche in der Ausnehmung ist, und wobei,
wenn sich der Aktor (31) in der Feststellposition befindet, sich der Eingriffsabschnitt (32) in der Ausnehmung des Schafts befindet.

5. Drehwerkzeug für die Metallbearbeitung nach Anspruch 4, wobei
- die Anschlagfläche eine nach oben weisende keilförmige Fläche ist, die sich in Richtung der Welleneingangsöffnung verjüngt,
- die Eingriffsfläche eine nach unten weisende keilförmige Fläche aufweist, die sich nach innen verjüngt,
- und wobei, wenn der Aktor (31) betätigt wird, um sich in die Feststellposition zu bewegen, sich der Eingriffsabschnitt (32) in der Ausnehmung der Welle nach innen bewegt, wodurch die Eingriffsfläche gleitet und gegen die Widerlagerfläche drückt, um die Welle (18) in die erste axiale Position zu zwingen.

6. Drehwerkzeug für die Metallbearbeitung nach Anspruch 5, wobei, gesehen in einem Querschnitt, der die Längsachse (19) des Schafts (18) und eine zentrale Längsachse (25) des ersten Teils des seitlichen Werkzeugkörperlochs (24) aufweist, die Anschlagfläche und die Eingriffsfläche einen Winkel mit der zentralen Längsachse (25) des ersten Teils des seitlichen Werkzeugkörperlochs (24) von wenigstens 3° und höchstens 45° bilden.

7. Drehwerkzeug für die Metallbearbeitung nach Anspruch 6, wobei die Schaftausnehmung ein Durchgangsloch (26) mit einer zentralen Längsachse (56) ist, die die zentrale Längsachse (25) des ersten Abschnitts des seitlichen Werkzeugkörperlochs (24) mit demselben Winkel oder schneidet.

8. Drehwerkzeug für die Metallbearbeitung nach einem der Ansprüche 5 bis 7, wobei
- die Eingriffsfläche eine Fläche (33) aufweist, die die Form eines Kegelstumpfes hat,
- die Betätigungsstange (31) ein Außengewinde aufweist, das mit einem Innengewinde in dem ersten Abschnitt des seitlichen Werkzeugkörperlochs (24) in Eingriff steht,
- und wobei, wenn der Aktor (31) betätigt wird, um sich in die Feststellposition zu bewegen, der Aktor (31) nach innen geschraubt wird.

9. Drehwerkzeug für die Metallbearbeitung nach Anspruch 7 oder nach Anspruch 7 und 8, wobei
- die Werkzeugkörperbohrung (10) eine Kühlmitteleinlassöffnung aufweist, wobei sich die Kühlmitteleinlassöffnung in der ersten axialen Stellung der Welle (18) unterhalb eines unteren Endes der Welle (18) befindet,
- der Kühlflüssigkeitskanal (23) des Haltestifts (17) ein Innenkanal ist, der eine Kühlflüssigkeitseinlassöffnung aufweist, die sich in einer nach unten weisenden Fläche in der Ausnehmung der Welle in Form des Durchgangslochs (26) befindet, und wobei
- der Schaft (18) zwischen dem unteren Ende und einer Schaftausgangsöffnung des Durchgangslochs (26) einen Außenflächenabschnitt aufweist, der sich in einem Abstand zur Längsachse (19) befindet, der kleiner ist als der Radius der Werkzeugkörperbohrung (10), um Kühlmittelfluid in der Werkzeugkörperbohrung (10) von der Einlassöffnung der Werkzeugkörperbohrung (10) zur Einlassöffnung des Innenkanals des Haltestifts (17) an dem Schaft (18) vorbeizulassen.

10. Drehwerkzeug für die Metallbearbeitung nach einem der vorhergehenden Ansprüche, wobei
- der Kopf (20) eine sich in Längsrichtung erstreckende Seitenfläche aufweist, wobei die erste Auslassöffnung (22) in der vorderen Seitenfläche angeordnet ist,
- der Kühlflüssigkeitskanal (23) einen ersten inneren Austrittskanal (41) enthält, welcher Austrittskanal (41) eine zentrale Längsachse (42) aufweist und sich von einer inneren Position in dem Kopf (20) zu der ersten Austrittsöffnung (22) erstreckt, und wobei
- die zentrale Längsachse (42) des ersten Austrittskanals (41) und die Längsachse (19) des Schafts einen spitzen Winkel β ausbilden, der einen Wert von 45° oder mehr aufweist.

11. Drehwerkzeug für die Metallbearbeitung nach Anspruch 10, wobei
- eine Verlängerung der zentralen Längsachse (42) des ersten Austrittskanals (41) eine Stelle berührt, an der sich beim Halten eines Schneideinsatzes (9) in dem Einsatzsitz (8) eine aktive Schneidkante des Schneideinsatzes (9) befindet.

12. Drehwerkzeug für die Metallbearbeitung nach einem der Ansprüche 3 bis 9, oder 3 und 10, oder 3 und 11, wobei
- der Werkzeugkörper (1) eine zweite seitliche Werkzeugkörperfläche (6) aufweist, die sich von der oberen Werkzeugkörperfläche (4) an einer der ersten seitlichen Werkzeugkörperfläche (5) gegenüberliegenden Seite nach unten erstreckt,
- das seitliche Werkzeugkörperloch (24) weiterhin einen zweiten Abschnitt aufweist, der die zweite seitliche Werkzeugkörperfläche (6) mit der Werkzeugkörperbohrung (10) verbindet,
- der Schaft (18) in der Werkzeugkörperbohrung (10) in zwei um 180° beabstandeten Winkelstellungen axial verschiebbar ist, so dass in der ersten axialen Stellung die Schafteintrittsöffnung wahlweise entweder
- dem ersten Abschnitt des seitlichen Werkzeugkörperlochs (24), oder
- dem zweiten Abschnitt des seitlichen Werkzeugkörperlochs (24) zugewandt ist,
- der Kühlmittelkanal (23) eine zweite Auslassöffnung (22) im Kopf (20) aufweist, wobei die zweite Auslassöffnung (22) von der ersten Auslassöffnung (22) um 180° winkelmäßig beabstandet ist,
- und wobei der Aktor (31) wahlweise entweder im ersten Abschnitt oder im zweiten Abschnitt des seitlichen Werkzeugkörperlochs (24) beweglich montiert ist und an beiden Stellen betätigbar ist, um, wenn sich der Schaft (18) in der ersten axialen Position mit einer passenden Winkelposition befindet, in die Feststellposition zu gelangen.

13. Drehwerkzeug für die Metallbearbeitung nach einem der vorhergehenden Ansprüche, wobei das Halteelement (11) ein abtrennbares Bauteil ist.

14. Drehwerkzeug für die Metallbearbeitung nach einem der vorangehenden Ansprüche, wobei das Halteelement (11) von der oberen Werkzeugkörperfläche (4) weg vorgespannt ist.

15. Drehwerkzeug für die Metallbearbeitung nach einem der vorangehenden Ansprüche, wobei das Drehwerkzeug ferner einen Schneideinsatz (9) aufweist, der mit dem Halteelement (11) verbunden ist.

## Revendications

1. Outil de tournage destiné à la découpe de métal comprenant
- un corps d'outil (1), lequel présente une surface supérieure de corps d'outil (4), et lequel comprend
- agencé au niveau d'une extrémité avant dans la surface supérieure de corps d'outil (4), un siège de plaquette (8) destiné à recevoir une plaquette de coupe (9), et
- un alésage de corps d'outil (10) qui est espacé du siège de plaquette (8) et s'étend vers le bas depuis une ouverture dans la surface supérieure de corps d'outil (4),
- un élément de serrage (11), lequel est agencé au niveau de la surface supérieure de corps d'outil (4), et lequel comprend
- un corps de base (12), lequel présente
- une surface supérieure de corps de base (14), et une surface inférieure de corps de base (15) faisant face à la surface supérieure de corps d'outil (4), et
- un trou traversant d'élément de serrage (16), lequel s'étend depuis une ouverture dans la surface supérieure de corps de base (14) jusqu'à une ouverture dans la surface inférieure de corps de base (15), et lequel est aligné avec l'alésage de corps d'outil (10),
- et un bras de serrage (13), lequel fait saillie depuis le corps de base (12) et s'étend au moins en partie au-dessus du siège de plaquette (8), et
- une broche de serrage (17), laquelle relie le corps d'outil (1) et l'élément de serrage (11), et laquelle comprend
- une tige longitudinale (18) qui présente un axe longitudinal (19) et qui s'étend à travers le trou traversant d'élément de serrage (16) et jusque dans l'alésage de corps d'outil (10), où la tige (18) est reçue axialement avec possibilité de déplacement dans l'alésage de corps d'outil (10) et actionnable pour être déplacée vers une première position axiale,
- une tête (20) au niveau d'une extrémité supérieure de la tige (18), et
- un canal à fluide réfrigérant (23) présentant une première ouverture de sortie (22) dans la tête (20),
où
la broche de serrage (17) est configurée pour, dans la première position axiale, engager le corps de base (12) et pousser le corps de base (12), ainsi que le bras de serrage en saillie (13), vers la surface supérieure de corps d'outil (4), grâce à quoi, lorsqu'une plaquette de coupe (9) est reçue dans le siège de plaquette (8), la plaquette de coupe (9) est serrée dans le siège de plaquette (8),
**caractérisé en ce que,**
- dans la première position axiale, la première ouverture de sortie (22) dans la tête (20) est située au-dessus de la surface supérieure de corps de base (14),
- la tige (18) est reçue axialement avec possibilité de déplacement dans l'alésage de corps d'outil (10) en étant en mesure de coulisser axialement, et **en ce que**
- l'outil de tournage comprend en outre un mécanisme de verrouillage, lequel est configuré pour, dans la première position axiale, bloquer de manière libérable la tige (18) dans l'alésage de corps d'outil (10) au moins par rapport à un coulissement axial vers la surface supérieure de corps d'outil (4).

2. Outil de tournage destiné à la découpe de métal selon la revendication 1, dans lequel le mécanisme de verrouillage est configuré pour, dans la première position axiale, bloquer de manière libérable la tige (18) dans l'alésage de corps d'outil (10) par rapport à une rotation relative par verrouillage positif.

3. Outil de tournage destiné à la découpe de métal selon la revendication 1 ou 2, dans lequel le corps d'outil (1) comprend une première surface latérale de corps d'outil (5), laquelle s'étend vers le bas depuis la surface supérieure de corps d'outil (4) d'un côté de celle-ci, et où le mécanisme de verrouillage comprend
- un trou latéral de corps d'outil (24) comprenant une première partie reliant la première surface latérale de corps d'outil (5) à l'alésage de corps d'outil (10),
- une surface de butée au niveau de la tige (18), et
- une barre d'actionnement (31), laquelle est montée avec possibilité de déplacement dans la première partie du trou latéral de corps d'outil (24) et par rapport à la tige (18), et laquelle comprend, au niveau d'une partie intérieure, une section d'engagement (32) présentant une surface d'engagement destinée à interagir avec la surface de butée,
et où
la barre d'actionnement (31) est actionnable pour, lorsque la tige (18) se trouve dans la première position axiale, être déplacée vers une position de verrouillage, dans laquelle la surface d'engagement appuie contre la surface de butée pour bloquer la broche de serrage (17) dans la première position axiale.

4. Outil de tournage destiné à la découpe de métal selon la revendication 3, dans lequel le mécanisme de verrouillage comprend en outre un évidement de tige, lequel, depuis une ouverture d'entrée de tige, s'étend transversalement à l'axe longitudinal (19) de la tige (18), où,
- dans la première position axiale, l'ouverture d'entrée de tige fait face à la première partie du trou latéral de corps d'outil (24), et où
- la surface de butée est une surface orientée vers le haut dans l'évidement, et où,
lorsque la barre d'actionnement (31) se trouve dans la position de verrouillage, la section d'engagement (32) est située dans l'évidement de tige.

5. Outil de tournage destiné à la découpe de métal selon la revendication 4, dans lequel
- la surface de butée est une surface inclinée orientée vers le haut qui s'incline en direction de l'ouverture d'entrée de tige,
- la surface d'engagement comprend une surface inclinée orientée vers le bas qui s'incline en direction de l'intérieur,
- et où, lorsque la barre d'actionnement (31) est actionnée pour être déplacée vers la position de verrouillage, la section d'engagement (32) se déplace vers l'intérieur dans l'évidement de tige, grâce à quoi la surface d'engagement coulisse et appuie contre la surface de butée pour pousser la tige (18) jusque dans la première position axiale.

6. Outil de tournage destiné à la découpe de métal selon la revendication 5, dans lequel, selon une vue d'observation dans une coupe transversale comprenant l'axe longitudinal (19) de la tige (18) et un axe longitudinal central (25) de la première partie du trou latéral de corps d'outil (24), la surface de butée et la surface d'engagement forment un angle α avec l'axe longitudinal central (25) de la première partie du trou latéral de corps d'outil (24) d'au moins 3° et d'au plus 45°.

7. Outil de tournage destiné à la découpe de métal selon la revendication 6, dans lequel l'évidement de tige est un trou traversant (26) avec un axe longitudinal central (56), lequel coupe l'axe longitudinal central (25) de la première partie du trou latéral de corps d'outil (24) selon le même angle α.

8. Outil de tournage destiné à la découpe de métal selon l'une quelconque des revendications 5 à 7, dans lequel
- la surface d'engagement comprend une surface (33) qui est façonnée sous la forme d'un cône tronqué,
- la barre d'actionnement (31) comprend un filetage qui est en engagement avec un taraudage dans la première partie du trou latéral de corps d'outil (24),
- et où, lorsque la barre d'actionnement (31) est actionnée pour être déplacée vers la position de verrouillage, la barre d'actionnement (31) est vissée vers l'intérieur.

9. Outil de tournage destiné à la découpe de métal selon la revendication 7, ou selon les revendications 7 et 8, dans lequel
- l'alésage de corps d'outil (10) comprend une ouverture d'entrée de fluide réfrigérant, où, lorsque la tige (18) se trouve dans la première position axiale, l'ouverture d'entrée de fluide réfrigérant est située sous une extrémité inférieure de la tige (18),
- le canal à fluide réfrigérant (23) de la broche de serrage (17) est un canal interne présentant une ouverture d'entrée de fluide réfrigérant située dans une surface orientée vers le bas dans l'évidement de tige sous la forme du trou traversant (26), et où
- la tige (18), entre l'extrémité inférieure et une ouverture de sortie de tige du trou traversant (26), présente une partie de surface extérieure laquelle est située à une distance de l'axe longitudinal (19) qui est inférieure au rayon de l'alésage de corps d'outil (10) pour permettre au fluide réfrigérant de passer par la tige (18) dans l'alésage de corps d'outil (10) depuis l'ouverture d'entrée de l'alésage de corps d'outil (10) jusqu'à l'ouverture d'entrée du canal interne de la broche de serrage (17).

10. Outil de tournage destiné à la découpe de métal selon l'une quelconque des revendications précédentes, dans lequel
- la tête (20) présente une surface latérale avant s'étendant longitudinalement, où la première ouverture de sortie (22) est située dans la surface latérale avant,
- le canal à fluide réfrigérant (23) comprend un premier canal de sortie interne (41), lequel canal de sortie (41) présente un axe longitudinal central (42) et s'étend depuis une position intérieure dans la tête (20) jusqu'à la première ouverture de sortie (22), et où
- l'axe longitudinal central (42) du premier canal de sortie (41) et l'axe longitudinal (19) de la tige forment un angle aigu β lequel présente une valeur de 45° ou plus.

11. Outil de tournage destiné à la découpe de métal selon la revendication 10, dans lequel
- un prolongement de l'axe longitudinal central (42) du premier canal de sortie (41) passe par un point où, lorsqu'une plaquette de coupe (9) est serrée dans le siège de plaquette (8), une arête de coupe active de la plaquette de coupe (9) est située.

12. Outil de tournage destiné à la découpe de métal selon l'une quelconque des revendications 3 à 9, ou 3 et 10, ou 3 et 11, dans lequel
- le corps d'outil (1) comprend une seconde surface latérale de corps d'outil (6), laquelle s'étend vers le bas depuis la surface supérieure de corps d'outil (4) sur un côté opposé à la première surface latérale de corps d'outil (5),
- le trou latéral de corps d'outil (24) comprend en outre une seconde partie reliant la seconde surface latérale de corps d'outil (6) à l'alésage de corps d'outil (10),
- la tige (18) peut axialement coulisser dans l'alésage de corps d'outil (10) selon deux positions angulaires espacées de 180° de sorte que, dans la première position axiale, l'ouverture d'entrée de tige fait sélectivement face soit
- à la première partie du trou latéral de corps d'outil (24), soit
- à la seconde partie du trou latéral de corps d'outil (24),
- le canal à fluide réfrigérant (23) présente une seconde ouverture de sortie (22) dans la tête (20), laquelle seconde ouverture de sortie (22) est angulairement espacée de la première ouverture de sortie (22) de 180°,
- et où la barre d'actionnement (31) est sélectivement montée avec possibilité de déplacement soit dans la première partie, soit dans la seconde partie du trou latéral de corps d'outil (24), et dans les deux positions est actionnable pour, lorsque la tige (18) se trouve dans la première position axiale avec une position angulaire correspondante, être déplacée vers la position de verrouillage.

13. Outil de tournage destiné à la découpe de métal selon l'une quelconque des revendications précédentes, dans lequel l'élément de serrage (11) est un composant séparable.

14. Outil de tournage destiné à la découpe de métal selon l'une quelconque des revendications précédentes, dans lequel l'élément de serrage (11) est écarté de la surface supérieure de corps d'outil (4).

15. Outil de tournage destiné à la découpe de métal selon l'une quelconque des revendications précédentes, où l'outil de tournage comprend en outre une plaquette de coupe (9) reçue dans le siège de plaquette (8).
